# EUROPEAN PATENT APPLICATION

(11) **EP 2 388 120 A2**
(43) Date of publication of application: **23.11.2011**
(21) Application number: 11157985.0
(22) Date of filing: 12.03.2011
(51) Int. Cl.: B29C 35/02, B30B 15/06

(54) **Heating press plate of vulcanizing press machine, unit of heating press plates and vulcanization method using heating press plates**

(30) Priority: 22.05.2010 PL 39128410
(71) Applicant: Linter Spolka z ograniczona odpowiedzialnoscia, 32-340 Wolbrom (PL)
(72) Inventor: Marciniak, Zbyszek, 97-300, Piotrkow Trybunalski (PL)
(74) Representative: Hudy, Ludwik

(57) **Abstract**

In a heating press plate comprising a frame-shaped skeleton (40) with ducts connected with an inlet and an outlet of heating medium, whereby to the frame at its bottom is mounted a membrane having a close chamber for the heating medium and whereby the chamber is connected with the ducts of the frame connected with the inlet and the outlet of the heating medium whereas to the frame at its top is mounted a covering plate, the skeleton (40) is made of profiles having quadratic or rectangular cross-sections and at least one of the profiles has a duct with the inlet, and an another profile, situated at opposite side of the frame in relation to the profile with the duct comprising the inlet, has a duct with the outlet, and that the membrane has at least two separately disposed metal sheets to form the close chamber for the heating medium from which a bottom metal sheet (12) of the membrane is mounted at the bottom area of the skeleton (40) formed from the profiles and a top metal sheet (11) of the membrane, situated facing the covering plate, has two opposing bent edges, which are bent towards each other and outwards from the bottom metal sheet (12) and are fastened to an upper area of the skeleton (40), whereby one of the bent edges is fastened to an upper or top part of the profile with the duct that has the inlet and the other bent edge is fastened to an upper or top part of the profile with the duct that has the outlet.

## Description

The subjects of the invention are a heating press plate and a unit of heating press plates, especially for a heating system in a vulcanizing press machine used to vulcanize belts of belt conveyors. The subject of the invention is also a vulcanization method using heating press plates.

The most known vulcanization method used to vulcanize objects, especially those made of rubber, suggests placing the object to be vulcanized between the elements that are pressed together, with at least one of those elements being heated. The result of heating and pressing is that the objects being vulcanized are bonded together during the vulcanization process. In regards to the vulcanizing press machine, the elements being pressed are plates heated using a medium, such as a heating fluid flowing through the ducts within the press plates. During the ongoing vulcanization process, the heating fluid is heated in a heating system located outside the heating press plates and pumped into the ducts in the heating press plates of the vulcanizing press machine.

The commonly known heating system in a vulcanizing press machine comprises a tank with a heating fluid, elements to heat the heating fluid, a pump forcing the heating medium to flow through, and hydraulic pipes connecting the tank, pump, and heating press plates. Additionally, the heating system can be equipped with a heating fluid temperature controller that, indirectly, also controls the temperature of the heating press plates.

The heating system indicated above derives itself from the invention description disclosed under Polish Patent No. PL146076, and its key subunits are mounted on a mobile trolley. Specifically, a heating system with a tank for heating fluid as well as an electric heater are placed on the mobile trolley along with a suction and force pump, fluid feeding lines, and fluid return lines. The heating unit is equipped with a distribution valve, check valves, overflow valves, and manometers and thermometers connected to the electric control system.

The problem with this solution is the long time required to heat the heating medium, namely a problem which arises from the need to heat the medium's entire volume in the tank.

Another known heating system is known from the invention description disclosed under Polish Patent Application No. P-384421, entitled "A method to heat vulcanizing press machine using a liquid medium and a heating system for the vulcanizing press machine". The heating system described by the patent application specification is equipped with heating press plates that are heated by a liquid medium, which is pumped by a pump from the tank. This heating system is characterized by a throttle within the heating medium flow route from the tank to the heating press plate, whereas the best location for the throttle would be the inlet of the heating press plate which is connected with the pressure feeding line. The liquid medium is cooled in a cooler located within the route and flows from the heating press plate to the tank.

A disadvantage of the above described solution consists in problems referring to the seal tightness in the pipe section between the suction and force pump and the reducing pipe, namely in connection between the high pressure feeding line and the plate in a place, where the reducing pipe is mounted in the heating press plates.

The idea of the present invention is a heating press plate comprising a frame-shaped skeleton with ducts connected with an inlet and outlet for a heating medium as well as a membrane with a chamber for the heating medium which is mounted to the lower or bottom part of the frame. This chamber is connected to the ducts in the frame, which are linked to the inlet and outlet of the medium fluid. In addition, a covering plate is secured to the upper or top part of the frame. The heating press plate under this invention is characterized in that the skeleton is made of profiles having a quadratic or rectangular cross-section whereas at least one profile has the duct with the inlet and another profile, situated opposite the duct with the inlet, has the duct with the outlet. The membrane comprises at least two metal sheets placed in the distance each other to form together with the profiles of the frame a close chamber for the heating medium. The bottom metal sheet is secured to the lower or bottom part of the skeleton made up of the profiles. The top metal sheet, situated above the bottom metal sheet, has two bent edges, situated opposite to each other and bent towards each other. One bent edge of the top metal sheet is secured to the profile with throughholes connecting with the duct that has the inlet, especially to the profile's upper or top part, while the second bent edge of the top metal sheet is mounted to the profile with throughholes connecting with the duct that has the outlet, especially to the profile's upper or top part. Remaining two straight edges of the top metal sheet are mounted above the edges of the bottom metal sheet to the profiles of the frame.

Preferably, an insulating insert is placed between the membrane and the covering plate. The insulating insert fills in the space between the membrane and the covering plate.

Preferably, the insulating insert includes empty chambers, especially openings, to reduce the weight of the heating press plate.

Preferably, to the profiles making up the frame, especially to places where the frame is not covered by the covering plate and the membrane, insulating strips are mounted to outer sides situated within the planes perpendicular to the membrane.

Preferably, one of the insulating strips can be dismantled, namely a strip that covers the entire protrusion-free surface at the outer side of the heating press plate.

Preferably, elements connecting the plates to each other and thus making units of them are placed in the frame, in the vicinity of the protrusion-free surface.

Furthermore, the idea of this invention is a unit of plates that has at least two heating press plates that have a frame-shaped skeleton with ducts that are connected with the inlet and the outlet of the heating medium. A membrane with a chamber for the heating medium is secured to the frame of each of the heating press plates, in the plate's lower or bottom part. The membrane with a chamber of heating medium that is connected with the ducts of the frame. The ducts of the frame are connected with the inlet and the outlet to allow the heating medium to flow through the chamber of the membrane. A covering plate is secured to the upper or top part of the frame of each of the heating press plates. The unit of heating press plates is characterized in that the skeleton of each frame is made of profiles having a quadratic or rectangular cross-section. The profile of the frame that has the duct with the inlet is situated opposite to the profile of the frame that has the duct with the outlet. A membrane of each plate has at least two metal sheets to enclose the close chamber for the heating medium. The bottom metal sheet is secured to the lower or bottom part of the frame and the top metal sheet, situated on the side of the covering plate, has two facing edges, which are bent towards each other. One edge is secured to the upper or top part of the profile with the duct having the inlet, and the second edge is secured to the upper or top part of the profile with the duct having the outlet. The heating press plates make contact with each other by the non-covered surfaces of the profiles.

The idea of this invention is also a vulcanization method that uses a heating plate which includes a frame-shaped skeleton with the ducts connected with an inlet and an outlet for the heating medium. The vulcanization method calls for the belt of the belt conveyor to be situated in the place where it is being vulcanized between the heating press plates pressed to each other, as well as to be simultaneously heated using a heating medium. What characterizes the frame-shaped skeleton is that it is made of profiles that have a quadratic or a rectangular cross-section in order to make the heating press plate rigid. The profiles that make the skeleton are characterized by the fact that at least one profile has the duct with the inlet, and another profile, situated opposite the duct with the inlet, has the duct with the outlet whereas a membrane has at least two metal sheets to enclose the closed chamber for the heating medium. The bottom metal sheet is secured to the lower or bottom part of the skeleton comprising the profiles, and the top metal sheet, situated above the bottom metal sheet, has two facing edges, which are bent towards each other. One edge is secured to the upper or top part of the profile with the duct that has the inlet, and the second edge is secured to the upper or top part of the profile with the duct that has the outlet.

Preferably, prior to placing the belt of the belt conveyor between the heating press plates, the insulating strips are secured to the frame's profiles, i.e. to the frame's sides on the external side of the heating press plate that is not covered by the covering plate and the membrane. Those insulating strips are mounted within the planes perpendicular to the membrane.

Preferably, prior to placing the belt of the belt conveyor between the heating press plates, the insulating strips are placed onto the side surfaces of the profiles of each of the frames, which are situated on the opposite sides of the belt of the belt conveyor. This means that the insulating strips are mounted to the frame's sides located outside the external side of the heating press plate that is not covered by the covering plate. These insulating strips are mounted within the planes perpendicular to the membrane, and at least one side that has a flat surface is left uncovered by the strip, to which the heating press plate with one side not covered by the strip with a flat surface is pushed closer. In this way, the units of heating plates are formed by adhering plates and are situated on the opposite sides of the belt of the belt conveyor in the place where this belt is being vulcanized.

Other objects, advantages, and novel features of the invention will become more apparent from the following detailed description of exemplary embodiments, when taken in conjunction with the accompanying drawings, in which:
Fig. 1 schematically shows a heating press plate in its cross-section along the plane parallel to the membrane without the covering plate;
Fig. 2 shows a detail 'W' of the fragment of the heating press plate as marked in Fig. 1, without the outer plate;
Fig. 3 shows a cross-section along the line A-A as marked in Fig. 2;
Fig. 4 shows a cross-section along the B-B line as marked in Fig. 2;
Fig. 5 shows a cross-section along the C-C line as marked in Fig. 1;
Fig. 6 shows a cross-section along the D-D line as marked in Fig. 1;
Fig. 7 shows a cross-section along the E-E line as marked in Fig. 2;
Fig. 8 shows a cross-section along the F-F line as marked in Fig. 2;
Fig. 9 shows a cross-section along the G-G line as marked in Fig.1 without the bolt and with the marked contour of the heat-insulating strip;
Fig. 10 shows a fragment of the cross-section of the unit of heating press plates in the place of their contact with the disassembled frontal heat-insulating strips;
Fig. 11 shows the belt of a belt conveyor during the ongoing pressure vulcanization process using the heating press plates; and
Fig. 12 shows the belt of the belt conveyor during the ongoing vulcanization process using the unit of heating press plates.

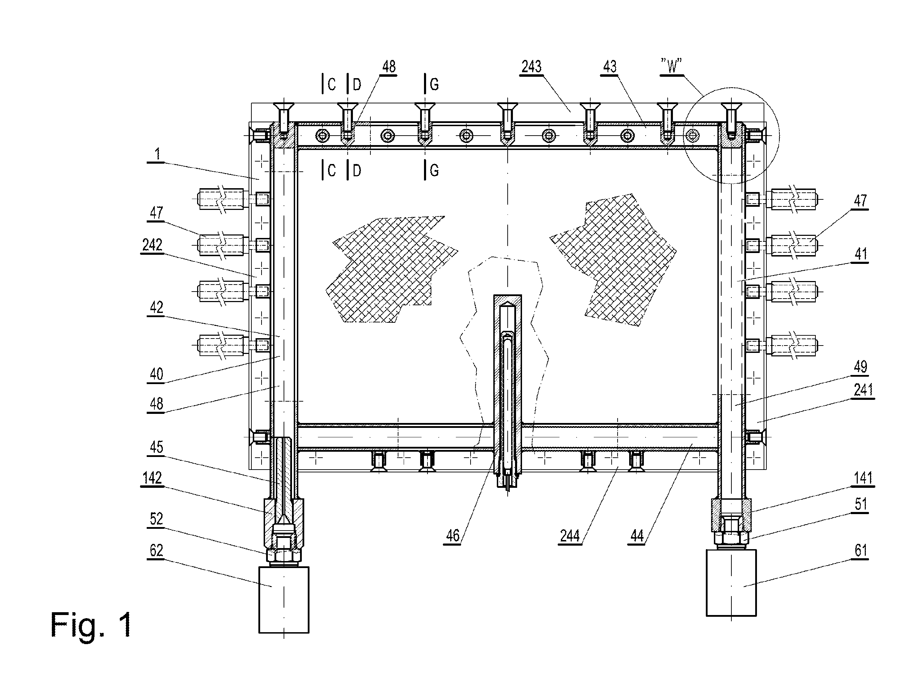

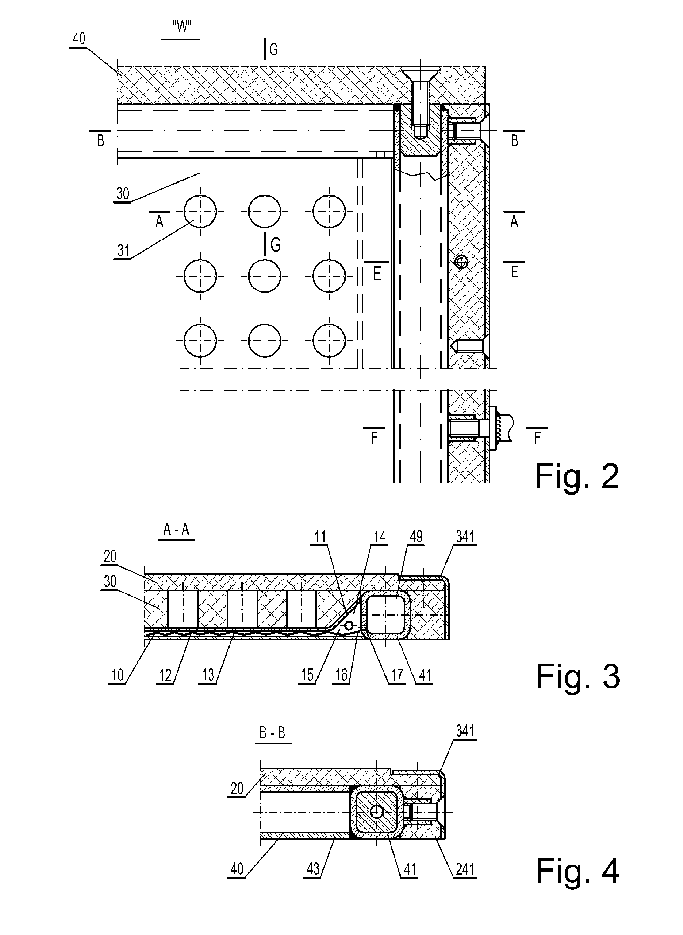

The heating press plate 1 as presented in Fig. 1 has a shape of a rectangular prism or a cuboidal solid and contains a skeleton 40, to which, in its lower or bottom part, a membrane 10 is secured, and, also, in its upper or top part opposite the membrane, a covering plate 20 is secured. Between the membrane 10 and the covering plate 20, an insulating insert 30 is placed as shown in Fig. 2 and 3. The insulation insert 30 fills the space between the membrane 10 and the covering plate 20 and provides the heating press plate 1 with necessary rigidity. The insulating insert 30 may have empty chambers or spaces such as openings to reduce the total weight of the heating press plate 1. In one of the solutions, the membrane 10 and the covering plate 20 are parallel to each other. The skeleton of the heating press plate, shaped as a frame with ducts 48, 49, connected with the inlet and the outlet for the heating medium, encloses the space between the membrane 10 and the covering plate 20. In one of the solutions represented in Fig. 1, the space between the membrane 10 and the covering plate 20 is enclosed at all sides by the elements made of profiles, which form the skeleton 40. The side elements 41, 42 of the skeleton 40 are profiles that have quadratic or rectangular cross-sections. They may be equipped with holders 47, for example shaped as longitudinal elements, most usually tubes with a threaded part at the end to make it possible to secure them to the skeleton 40 in a disconnectable way. In the embodiment as presented in Fig. 1, the longitudinal axes of the holders 47 are situated within the plane running parallel to the membrane 10 and/or to the covering plate 20.

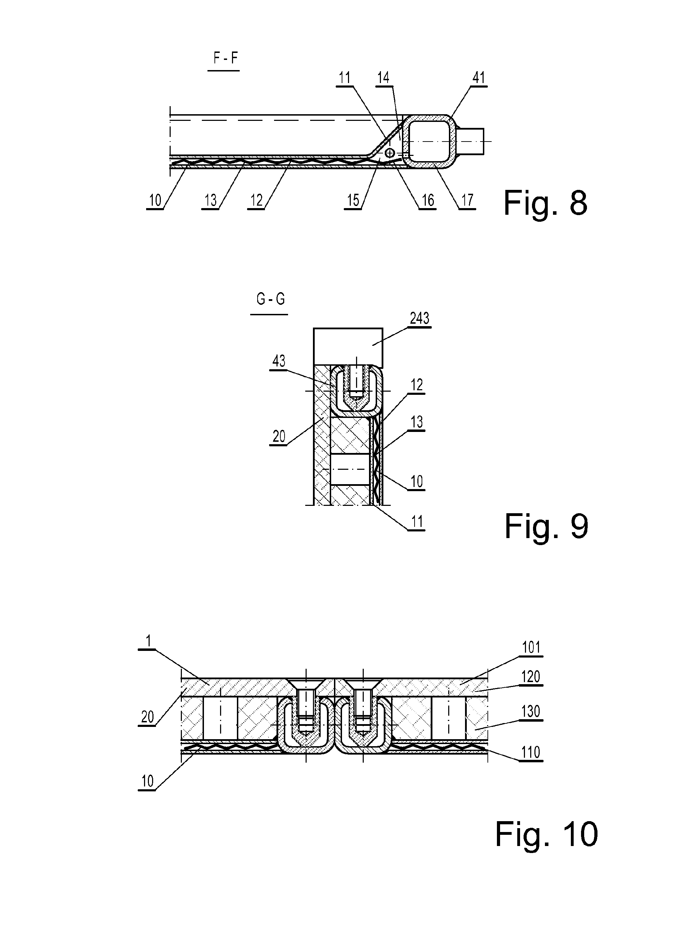

In the most frequently encountered embodiments, the membrane 10 shown in Fig. 3 and Fig. 8 has two layers made of an upper outer or top metal sheet 11 and a lower outer or bottom metal sheet 12, between which a steering system is placed to steer the flow of the heating medium between the upper outer/top metal sheet 11 and the lower outer/bottom metal sheet 12, for example, a grid 13. The grid 13 forces the flow of the hot medium, for example hydraulic oil, close to the inner surfaces of the metal sheets. In the most solution, the membrane 10 has two layers from which the lower or bottom metal sheet 12 is secured to the lower or bottom wall area of the side elements 41, 42 of the skeleton 40, whereas the upper outer/top metal sheet 11 is secured to the upper or top inner wall area of the side elements 41, 42 and, if viewing it from the sideline, it runs at ends oblique to the upper or top wall, for example at an angle ranging from 30° to 60°, particularly at 45°. The metal sheet 11 at two ends situated oppositely each other is bent so that it turns from the initial, transverse position upwardly and towards the wall of both the side element 41 and the side element 42 and in remaining area the metal sheet 11 runs parallel to the lower or bottom metal sheet 12 of the membrane 10. Remaining two straight edges of the top metal sheet 11 are mounted to the profiles of the frame above the edges of the bottom metal sheet. The reinforcing ribs 15 with openings 16, which stiffen and strengthen the joint of the membrane 10 with the skeleton 40, can be situated both in the space 14 formed between the transversely running fragment of the upper outer/top metal sheet 11 and the lower outer/bottom metal sheet 12, and the inner wall of the side element 41 and in the space formed between the oblique running fragments of the upper outer/top metal sheet 11, the lower outer/bottom metal sheet 12 as well as the inner wall of the side element 42. The space 14, located at the side element 41, is connected, using two through openings 17, with the duct 49 discharging the heating medium from the membrane 10. The space situated at the side element 42 is connected, using the through openings, with the duct 48 supplying the heating medium. In the case of the heating press plate 1 as shown in Fig. 1, the heating medium is fed to the duct 48 and pumped into the space at the side element 42. From this space, the heating medium flows through the membrane's chamber and enters the space 14 at the side element 41. The heating medium flows through the through openings 17 and enters the duct 49, and then, it is discharged through an offtake.

In one of embodiments, the lower or bottom surface of the skeleton 40 adheres to the lower outer/bottom metal sheet 12. The skeleton 40 is secured at the edges to this lower outer/bottom metal sheet 12, for example using a 'V' flange weld. It is also possible that some regions of the lower or bottom metal sheet 12 are sufficiently elongated so that some elements of the skeleton 40, for example, its side elements 41, 42 adhere, at the lower or bottom, to the surface of the lower or bottom metal sheet.

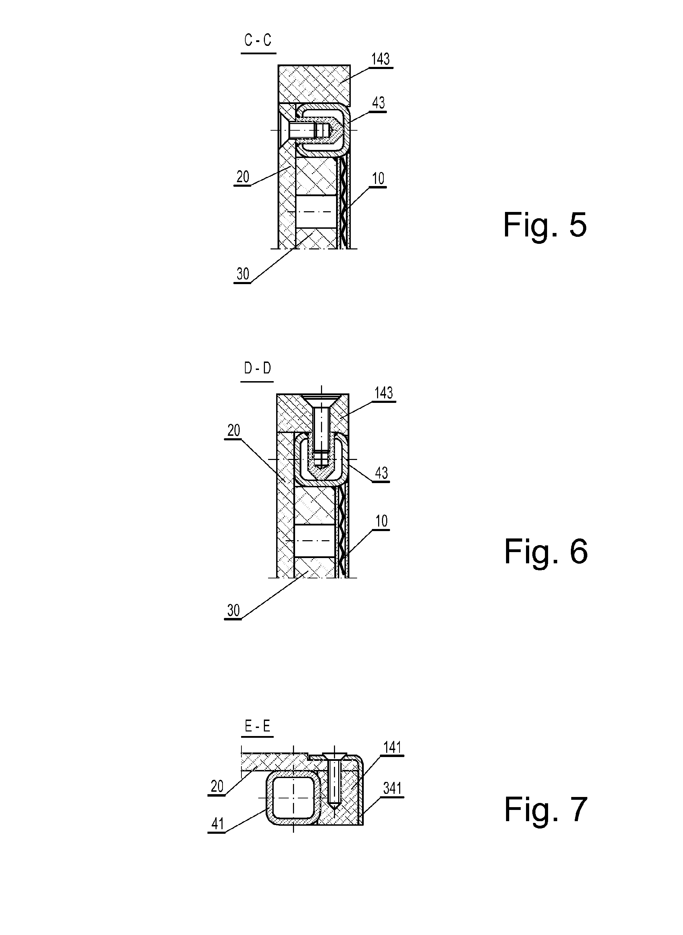

At its frontal part, the skeleton 40 has a frontal connector 43 as shown in Fig. 1 and Fig. 9. The external, frontal surface of the connector 43 lies within the plane of the ends of the side elements 41 and 42. The frontal connector 43 is connected with the side elements 41 and 42. The frontal connector 43 is a profile having a quadratic or rectangular cross-section and has, in its walls, openings to connect the inner space of the frontal connector with a chamber formed between the upper outer/top metal sheet 11 and the lower outer/bottom metal sheet 12. Therefore, it is possible to heat the connector using the heating medium. The membrane 10 is secured to the connector 43 at its lower or bottom part as it is shown in Fig. 5, Fig. 6, and Fig. 9. Also, it is clearly shown in these figures that the covering plate 20 is levelled out with the frontal plane of the connector 43, and, to the frontal part of the connector 43, a heat-insulating strip 143 is secured. The heat-insulating strip may be made, for example, of wood.

On the opposite side, relative to the frontal connector, the skeleton 40 has an inner connector 44 which is a profile having a quadratic or rectangular cross-section. Its ends are connected to inner side walls of the side elements 41 and 42. The ends of the side elements 41 and 42, which are the connecting, threaded ends 141, 142 for supplying and draining the heating medium, stick out, as shown in Fig. 1, outside the external, frontal surface of the internal connector 44. A low-pressure feeding line 62 and an offtake 61 can be connected with the threaded connecting ends 141, 142 using quick-releasing lines 51 and 52. The low-pressure feeding line 62 and the offtake 61 are connected with the inner ducts or oil ducts in the heating press plate or with the membrane chamber of the heating press plate.

Moreover, a throttle 45 or a monitored overflow valve can be mounted in one of the threaded, connecting ends 142 that serves as a connector with the feeding line supplying the heating medium. With a constant amount of the heating medium, the overflow speed thereof increases, and the heating medium, while rubbing against the walls of the throttle's seat 45, becomes more and more heated. Its temperature rises the more, the higher its throughflow speed is whereas the throughflow speed of the heating medium depends on the size of the gap or of the through opening. The heat, given off in the throttle 45, is passed to the membrane 10 by the heating medium.

In order to prevent the loss of the heat energy passed by the heating medium, the heat-insulating strips are secured, as mentioned above, around the skeleton 40, to its edges at a front to each side. The heat-insulating strips minimize loss of heat. Therefore, to the side elements 41 and 42, side strips 241, 242 with a shield 341 are fastened as shown in Fig. 7. And, to the frontal connector 43, a frontal strip 243 is mounted and, also, an inner strip 244 is mounted to the inner connector 44. In one of the solutions, the covering plate 20 overlaps at least one of the side strips 241, 242, or the internal strip 244, or covers it from the top. However, one edge of the covering plate 20 coincides with an outer surface of the skeleton 40, and the edge of the covering plate 20 is placed within the plane of the outer surface of the skeleton 40. Furthermore, the frontal strip 243 covers the entire frontal surface of the heating press plate because no parts of the heating press plate protrude. After removing the frontal strip 234, the bottom part of the heating press plate, close to its frontal surface, beginning from its outer edge, is metallic, since, within the edge region of the bottom plate, either the membrane 10 or the bottom of wall of the frontal connector 43, depending on the solution, constitutes this outer part. This solution is constructive especially when aggregating the heating press plates to weld elements, for example, belts showing considerable widths to be mounted in conveyors. Both side elements 41, 42, the frontal connector 43, and the inner connector 44 are equipped with connecting elements made of bushes 48 with a female thread or with an inner opening to enable the keying fit. The bushes 48 are fastened either inside the skeleton 40, for example, in the frontal connector 43, or outside the skeleton 40, for example, to the side elements 41, 42 and to the inner connector 44.

Moreover, the heating press plate 1 has a seat 46 of an indicator, for example, to measure the temperature of the heating medium flowing through the inside of the membrane 10. Most frequently, the seat 46 of the indicator is situated in those ranges of the membrane which contact the place where the elements are joined together, for example, within the axis of the heating press plate. Usually, the seat 46 of the indicator is constructed of a bush with one closed and one threaded end. The thread in the threaded end can be either female or male, and serves to mount the indicator.

In Fig. 10, a cross-section's fragment of the unit of the heating press plates 1 and 101 is shown, including the membranes 10, 110, the covering plates 20, 120, and the insulating inserts 130. The heating press plates 1 and 101 are shown with the dismounted or disassembled frontal plates and therefore, in the place where they are joined together, there are no under-heated regions called dead areas, and a high quality of belt vulcanization is ensured.

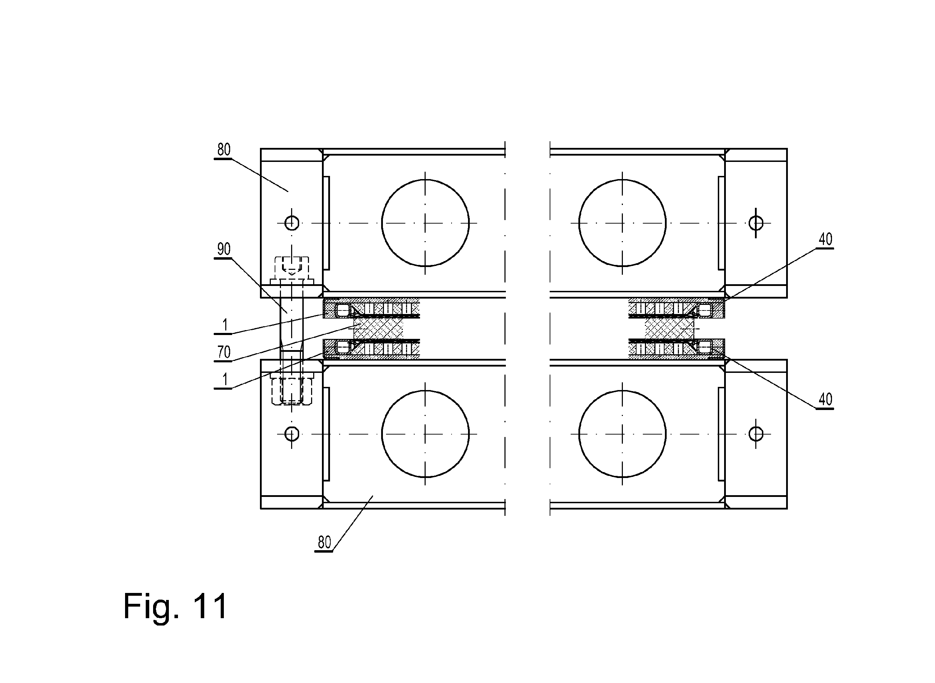

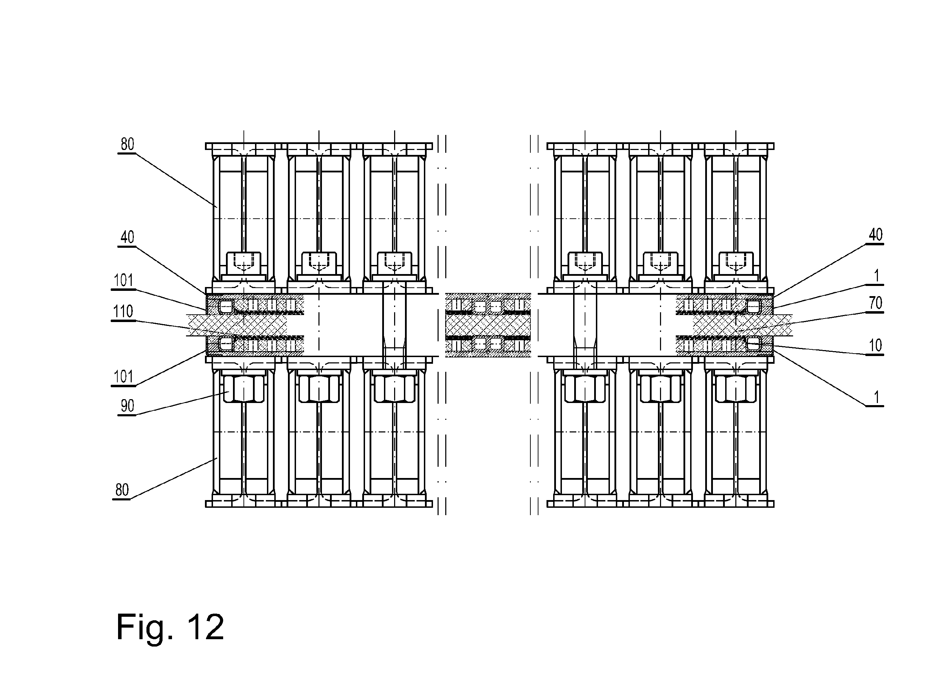

Fig. 11 represents the heating press plates 1, and Fig. 12 represents the unit of heating press plates 1 and 101 in a position prepared to weld the belt 70 of the belt conveyor. The belt 70 of the belt conveyor is situated between the membranes of at least two heating press plates 1. Whilst welding, the heating press plates 1 are vertically pressed to each other using a set of beams 80. The number of beams depends on the length of the heat-welded joint. The beams in the set adhere to the covering plates, which are good heat insulators, and therefore heat losses are reduced. Mechanical or hydraulic systems with actuators can be used to press the beams to each other; bolts 90, positioned at the ends of the beams, are an example of the mechanical system. The pressing is effective owing to the special construction of the skeleton that reinforces the heating press plate, i.e. the skeleton is made up of profiles having quadratic or rectangular cross-sections. At least one profile has a duct with an inlet, whereas another profile, lying opposite the profile with the duct including the inlet, has a duct with an outlet. The membrane comprises at least two metal sheets surrounding a closed chamber for the heating medium, namely the bottom metal sheet which is secured to the lower or bottom area of the skeleton comprising profiles, and the upper metal sheet which faces the covering plate and which has oppositely situated bent edges that are bent towards each other, whereas one edge of the metal sheet is fastened to the upper or top part of the profile with the duct having the inlet, and the other edge of the metal sheet is fastened to the upper or top part of the profile with the duct having the outlet. The heat loss is reduced during the ongoing vulcanization process as an effect of the specific location of the belt of the belt conveyor. Furthermore, prior to placing the belt between the heating press plates, insulating bars or strips are located within the planes perpendicular to the membrane and mounted to the profiles of the frame, namely to the frame's side on the outer surfaces of the heating press plate that are not covered by membrane and the covering plate.

The unit of heating press plates without connectors, shown in Fig. 12, comprises at least two heating press plates 1, 101, to be placed at each side of the belt being vulcanized. The plates 1, 101 have a skeleton 40 shaped as a frame with ducts connected to the inlet and outlet for the heating medium. To the frame of each of the heating press plates 1, 101, in their lower or bottom area, a membrane 10, 110 is secured with a chamber for the heating medium. The chamber is linked with the frame's ducts connected with the inlet and outlet for the heating medium. A covering plate 20, 120 is mounted to the frame of each heating press plates 1, 101, in its upper or top area. The skeleton 40 of each frame is made of profiles that have quadratic or rectangular cross-sections. At least one profile has a duct with the inlet, and another profile, opposite to the profile with the duct with the inlet, has a duct with the outlet. The membrane 10, 110 comprises at least two metal sheets holding a closed chamber for the heating medium. The bottom metal sheet is secured to the lower or bottom area of the skeleton 40, and the top metal sheet's two opposing edges , situated on the side of the covering plate, are bent towards each other. One of the bent edges is fastened to the upper or top part of the profile with the duct comprising the inlet, and the second edge is fastened to the upper or top area of the profile with the duct that has the outlet. The heating press plates contact each other at protrusion-free surfaces. The protrusion-free surfaces in this embodiment are non-covered surfaces of the profiles. Whilst vulcanizing using the set of heating press plates, prior to placing the belt of the belt conveyor between the sets of heating press plates, the insulating strips are mounted to the profiles of each of the frames at outer side surfaces. This means that the insulating strips are mounted to the frame's surfaces that are not covered by the membrane and the covering plate. These insulating strips are mounted within the planes perpendicular to the membrane whereby one side, as mentioned above, that has a flat surface or protrusion-free surface is left uncovered by the insulating strip to allow the protrusion-free surface of one plate of set of heating press plates to adhere to the protrusion-free surface of another plate of set of heating press plates. In this way, the units of heating plates are formed by the adhering plates and at least one unit of heating plates is situated on one side of the belt of the belt conveyor in the place where this belt is being vulcanized.

The solution under this invention has been illustrated using the selected embodiments thereof. However, those examples do not restrict the invention and do not exclude other options. It is obvious that some modifications could be incorporated without changing the essence of the solution. The examples as presented above do not exhaust the full range of potential applications of the solution under this invention.

## Claims

1. A heating press plate comprising a frame-shaped skeleton with ducts connected with an inlet and an outlet of heating medium, whereby to the frame at its bottom is mounted a membrane having a close chamber for the heating medium and whereby the chamber is connected with the ducts of the frame connected with the inlet and the outlet of the heating medium whereas to the frame at its top is mounted a covering plate, **characterised in that** the skeleton (40) is made of profiles having quadratic or rectangular cross-sections and at least one of the profiles has a duct with the inlet, and an another profile, situated at opposite side of the frame in relation to the profile with the duct comprising the inlet, has a duct with the outlet, and that the membrane has at least two separately disposed metal sheets to form the close chamber for the heating medium from which a bottom metal sheet (12) of the membrane is mounted at the bottom area of the skeleton (40) formed from the profiles and a top metal sheet (11) of the membrane, situated facing the covering plate, has two opposing bent edges, which are bent towards each other and outwards from the bottom metal sheet (12) and are fastened to an upper area of the skeleton (40), whereby one of the bent edges is fastened to an upper or top part of the profile with the duct that has the inlet and the other bent edge is fastened to an upper or top part of the profile with the duct that has the outlet.

2. The heating press plate according to claim 1, wherein between the membrane (10) and the covering plate (20) is placed an insulating insert (30) which fills space between the membrane (10) and the covering plate (20).

3. The heating press plate according to claim 2, wherein the insulating insert (30) has empty chambers to reduce the weight of the heating press plate (1).

4. The heating press plate according to claim 1 or claim 2 or claim 3, wherein insulating strips are mounted to the frame's profiles on the outer side of the heating press plate not covered by the covering plate and the membrane and wherein the insulating strips are situated perpendicularly to the membrane.

5. The heating press plate according to claim 4, wherein one of the insulating strips that covers a frontal part of the skeleton of the heating press plate without any protrusions or protrusion-free surface situated at the front of the heating press plate is dismountable or removable attached to the heating press plate.

6. The heating press plate according to claim 5, wherein elements to connect the heating press plates into units of plates are situated in the protrusion-free surface or the frame surface of the outer side of the heating press plate without any protrusions.

7. A unit of heating press plates comprising at least two heating press plates with ducts connected with an inlet and an outlet of heating medium, whereby to the frame of each heating press plate at its bottom is mounted a membrane having a chamber for the heating medium and whereby the chamber is connected with the ducts of the frame connected with the inlet and the outlet for the heating medium whereas to the frame at its top is mounted a covering plate, **characterised in that** the skeleton (40) of each heating press plate is made of profiles having quadratic or rectangular cross-sections and at least one of the profiles has a duct with the inlet, and an another profile, situated at opposite side of the frame in relation to the profile with the duct comprising the inlet, has a duct with the outlet, and that the membrane has at least two separately disposed metal sheets to form the chamber for the heating medium from which a bottom metal sheet (12) of the membrane is mounted at the bottom area of the skeleton (40) formed from the profiles and a top metal sheet (11), situated neighbouring the covering plate, has two opposing bent edges, which are bent towards each other and outwards from the bottom metal sheet (12), and are fastened to an upper area of the skeleton (40), whereby one of the bent edges is fastened to an upper or top part of the profile with the duct having the inlet and the other bent edge is fastened to an upper or top part of the profile with the duct having the outlet and whereby the heating press plates contact each other at sides with surfaces of the profiles without any protrusions after dismounting the insulating strips.

8. A vulcanization method using heating press plates having a frame-shaped skeleton with ducts connected with an inlet and an outlet for heating medium, the method comprising the following steps:
placing a belt of belt conveyor with a place of the belt to be vulcanized between the heating press plates,
pressing the heating press plates to each other whilst being simultaneously heated using the heating medium, wherein the skeleton is made of profiles having a quadratic or rectangular cross-section and at least one of the profiles has a duct with the inlet,
and an another profile, situated at opposite side of the frame in relation to the profile with the duct comprising the inlet, has a duct with the outlet, and wherein to the frame's bottom is mounted a membrane which has at least two separately disposed metal sheets to form the chamber for the heating medium from which a bottom metal sheet of the membrane is mounted at the bottom area of the skeleton formed from the profiles,
and a top metal sheet, situated by the covering plate, has two opposing each other bent edges, which are bent towards each other and outwards from the bottom metal sheet and are fastened to an upper area of the skeleton, and wherein one of the bent edges is fastened to an upper or top part of the profile with the duct having the inlet and the other bent edge is fastened to an upper or top part of the profile with the duct having the outlet.

9. The vulcanization method according to claim 8, wherein, prior to placing the belt of the belt conveyor between the heating press plates, insulating strips are mounted to the profiles of the frame at outer sides of the heating press plate that are not covered by the covering plate and wherein the insulating strips are situated perpendicularly to the membrane.

10. The vulcanization method according to claim 8, wherein, prior to placing the belt of belt conveyor between the heating press plates, units of heating press plates are formed from at least two heating press plates on each side of belt of belt conveyor by contacting heating press plates at sides with surfaces of the profiles without any protrusions and insulating strips are fastened to the frame's profiles on the outer side of the heating press plate not covered by the covering plate whereby the units of heating press plates adhere with sides covered by the membrane to the belt of the belt conveyor in a place, where the belt is being vulcanized.
